(19) Europäisches Patentamt
European Patent Office
Office européen des brevets

(11) **EP 1 273 776 B1**

(12) **EUROPÄISCHE PATENTSCHRIFT**

(45) Veröffentlichungstag und Bekanntmachung des Hinweises auf die Patenterteilung:
**26.11.2008 Patentblatt 2008/48**

(51) Int Cl.:
*F02C 9/28* *(2006.01)*   *F23N 1/00* *(2006.01)*

(21) Anmeldenummer: **02405388.6**

(22) Anmeldetag: **14.05.2002**

(54) **Brennstoffversorgungssystem und zugehöriges Betriebsverfahren**

Fuel supply system and method of operating the same

Système d'alimentation en carburant et méthode pour le commander

(84) Benannte Vertragsstaaten:
**DE GB**

(30) Priorität: **05.06.2001 DE 10127289**

(43) Veröffentlichungstag der Anmeldung:
**08.01.2003 Patentblatt 2003/02**

(73) Patentinhaber: **Alstom Technology Ltd**
**5400 Baden (CH)**

(72) Erfinder: **Moser, Ulrich**
**5210 Windisch (CH)**

(56) Entgegenhaltungen:
US-A- 4 437 303   US-A- 5 115 635
US-A- 5 303 541   US-A- 5 447 023
US-A- 6 148 601   US-B1- 6 226 976
US-B1- 6 247 919

**Beschreibung**

**Technisches Gebiet**

Die Erfindung betrifft ein Brennstoffversorgungssystem, das eine Brenneranordnung mit wenigstens einem Brenner, insbesondere einer Gasturbine, mit einem fluiden, also gasförmigen oder flüssigen, Brennstoff versorgt. Die Erfindung betrifft außerdem ein Verfahren zum Betrieb eines derartigen Brennstoffversorgungssystems.

**Stand der Technik**

Insbesondere bei der Kraftwerkstechnik, speziell bei Gasturbinen, werden Brennstoffversorgungssysteme dieser Art verwendet, um eine Brenneranordnung, die z.B. zum Beheizen einer Brennkammer einer Gasturbine betrieben wird, mit ausreichend Brennstoff zu versorgen. Eine solche Brenneranordnung kann einen oder mehrere Brenner aufweisen. Insbesondere bei einer Ring-Brennkammer können mehrere Brenner zu einer ringförmigen Brenneranordnung zusammengefaßt sein. Das Brennstoffversorgungssystem ist an eine Brennstoffzuführungsleitung angeschlossen, die das Brennstoffversorgungssystem mit dem Brennstoff speist. Ein Steuerventil ist in dieser Brennstoffzuführungsleitung angeordnet. Durch Betätigen dieses Steuerventils kann die Brennstoffeinspeisung in das Brennstoffversorgungssystem gesteuert werden.

Üblicherweise wird eine Gasturbine relativ stationär betrieben, so daß wesentliche Parameter, wie z.B. Brennkammer-Druck und BrennstoffMassenstrom, konstant sind. Eine Variation des Betriebsverhaltens der Gasturbine kann im wesentlichen durch eine Beeinflussung des BrennstoffMassenstroms erfolgen, der über die Brenneranordnung in die Brennkammer gelangt. Mit anderen Worten, die Brennerleistung bildet einen wesentlichen Parameter zur Beeinflussung des Turbinenbetriebs. Zum Einstellen bzw. Verstellen von Turbinenbetriebszuständen kann daher der über das Brennstoffversorgungssystem der Brenneranordnung zugeführte Brennstoffmassenstrom gesteuert werden. Zu diesem Zweck ist eine Leistungssteuerungseinheit vorgesehen, die in Abhängigkeit einer angeforderten Brennerleistung einen Brennstoffmassenstrom ermittelt, den das Brennstoffversorgungssystem der Brenneranordnung zuführen muß. Eine Ventilsteuerungseinheit betätigt in Abhängigkeit des so ermittelten Brennstoffmassenstroms das Steuerventil, um so den ermittelten Brennstoffmassenstrom in das Brennstoffversorgungssystem einzuspeisen.

Ein System zur Brennstoffversorgung einer Brennkraftmaschine, insbesondere einer kleinen Gasturbine, ist Gegenstand der Druckschrift US6148601. Über Kalibrierdüsen und Servoventile wird der Brennstoffmassenstrom der Brennkammer zugeleitet. Die Bestimmung des Brennstoffmassenstroms erfolgt anhand des Druckverlusts an den Kalibrierdüsen. Dieser Wert dient als Basis für einen Soll-Ist-Vergleich des Brennstoffmassenstroms. Anhand des Soll-Ist-Vergleichs wird das Servoventil zum Verändern des Brennstoffmassenstroms angesteuert.

Es hat sich jedoch gezeigt, daß insbesondere bei schnellen Transienten, z.B. Brennkammerdruck und/oder Brennstoffmassenstrom, eine deutliche Abweichung zwischen dem durch die Betätigung des Steuerventils in das Brennstoffversorgungssystem eingespeisten Brennstoffmassenstrom und dem daraufhin vom Brennstoffversorgungssystem der Brenneranordnung zugeführten Brennstoffmassenstrom auftreten kann. Diese Differenz wird auf das insbesondere bei stationären Gasturbinenanlagen beträchtliche Volumen des Brennstoffversorgungssystems sowie auf die Kompressibilität des darin eingeschlossenen Brennstoffs zurückgeführt. Des weiteren wird diese Differenz von einem Strömungswiderstand des Systems beeinflusst, der insbesondere am Übergang zwischen dem Versorgungssystem und der Brennkammer, also an den Brennerdüsen, auftritt. Aufgrund dieser Abweichung kommt es bei einem instationären Betrieb der Brenneranordnung bzw. der Gasturbine zu einem unerwünschten Betriebsverhalten.

**Darstellung der Erfindung**

Hier will die Erfindung Abhilfe schaffen. Die Erfindung, wie sie in den Ansprüchen gekennzeichnet ist, beschäftigt sich mit dem Problem, für ein Brennstoffversorgungssystem eine Möglichkeit anzugeben, den der Brenneranordnung zugeführten Brennstoffmassenstrom besser einstellen zu können.

Dieses Problem wird durch ein Verfahren mit den Merkmalen des Anspruchs 1 gelöst.

Die Erfindung beruht auf dem allgemeinen Gedanken, aus der angeforderten Brennerleistung zunächst einen ersten Sollwert für den Brennstoffmassenstrom zu ermitteln, mit dem die Brenneranordnung versorgt werden muß, um die angeforderte Brennerleistung erbringen zu können. Anhand dieses ersten Sollwerts des Brennstoffmassenstroms wird dann, insbesondere unter der Berücksichtigung des aktuellen Betriebszustands des Brennstoffversorgungssystems, ein zweiter Sollwert für den Brennstoffmassenstrom ermittelt, der so gewählt ist, daß das damit gespeiste Brennstoffversorgungssystem die Brenneranordnung mit dem zuvor bestimmten ersten Sollwert des Brennstoffmassenstroms versorgt. Das bedeutet, daß aus dem erforderlichen ersten Sollwert ein zweiter Sollwert bestimmt wird, der bei seiner Einspeisung in das Brennstoffversorgungssystem beim aktuellen Betriebszustand bewirkt, daß das Brennstoffversorgungssystem den gewünschten ersten Sollwert an die Brenneranordnung abgibt. Die dynamischen Effekte des Brennstoffversorgungssystems, z.B. aufgrund der Kompressibilität des eingeschlossenen Brennstoffvolumens, können durch die erfindungsgemäße Vorgehensweise mehr oder weniger eliminiert werden. Die Brennerleistung kann dadurch ohne zeitliche Verzögerung und ohne undefinierte Zwischenzustände direkt auf den gewünschten Wert eingestellt werden. Die Vorteile im Zusammenhang mit dem Betrieb einer mit einem Brennstoffversorgungssystem ausgestatteten Gasturbine, insbesondere in einer Kraftwerksanlage, liegen auf der Hand.

Bei der Ermittlung des zweiten Sollwerts des Brennstoffmassenstroms werden die Brennstofftemperatur im Brennstoffversorgungssystem, der in einer der Brenneranordnung nachgeschalteten Brennerkammer herrschende Brennkammerdruck, das mit dem Brennstoff gefüllte Volumen des Brennstoffversorgungssystems ebenso wie der Gesamtaustrittsquerschnitt aller Brenner der Brenneranordnung, aus dem der Brennstoff in die Brennkammer austritt, berücksichtigt. Mit Hilfe dieser Parameter kann der aktuelle Betriebszustand des Brennstoffversorgungssystem mehr oder weniger charakterisiert werden, wodurch es möglich ist, den aktuellen Betriebszustand des Brennstoffversorgungssystems mehr oder weniger bei der Ermittlung des zweiten Sollwerts für den Brennstoffmassenstrom zu berücksichtigen.

Das der Erfindung zugrunde liegende Problem wird auch durch ein Brennstoffversorgungssystem mit den Merkmalen des Anspruchs 3 gelöst. Auch hier beruht die Erfindung auf dem allgemeinen Gedanken, in Abhängigkeit der angeforderten Brennerleistung zunächst einen ersten Sollwert für den Brennstoffmassenstrom zu ermitteln, dann in Abhängigkeit dieses ersten Sollwerts einen zweiten Sollwert für den Brennstoffmassenstrom zu ermitteln, um schließlich das Steuerventil in Abhängigkeit des ermittelten zweiten Sollwerts zu betätigen. Die Ermittlung, insbesondere Berechnung, des zweiten Sollwerts des Brennstoffmassenstroms erfolgt dabei mittels einer dynamischen Korrektureinheit, die in Abhängigkeit des zuvor ermittelten ersten Sollwerts dynamisch den zweiten Sollwert so ermittelt, daß das damit gespeiste Brennstoffversorgungssystem die Brenneranordnung mehr oder weniger exakt mit dem gewünschten ersten Sollwert versorgt.

Bei einer besonderen Ausführungsform ist die dynamische Korrektureinheit zwischen einer den ersten Sollwert ermittelnden Leistungssteuerungseinheit und einer das Steuerungsventil betätigenden Ventilsteuerungseinheit zwischengeschaltet, wobei die Ausgangssignale der Leistungssteuerungseinheit, also zumindest der erste Sollwert des Brennstoffmassenstroms, dem Eingang der dynamischen Korrektureinheit und die Ausgangssignale der dynamischen Korrektureinheit, also zumindest der zweite Sollwert des Brennstoffmassenstroms, dem Eingang der Ventilsteuerungseinheit zugeführt werden. Die Ventilsteuerungseinheit betätigt dann in Abhängigkeit dieses zweiten Sollwerts das Steuerventil, so daß dementsprechend dem Brennstoffversorgungssystem der zweite Sollwert des Brennstoffmassenstroms zugeführt wird. Diese spezielle Ausführungsform hat den Vorteil, daß sie besonders einfach nachträglich in ein bereits bestehendes System integriert werden kann, in dem die dynamische Korrektureinheit nach Art einer Reihenschaltung zwischen die Leistungssteuerungseinheit und die Ventilsteuerungseinheit in den Daten- bzw. Signalstrom eingebunden wird.

Weitere wichtige Merkmale und Vorteile der Erfindung ergeben sich aus den Unteransprüchen, aus der Zeichnung und aus der zugehörigen Figurenbeschreibung anhand der Zeichnung.

## Kurze Beschreibung der Zeichnung

Ein bevorzugtes Ausführungsbeispiel der Erfindung ist in der Zeichnung dargestellt und wird in der nachfolgenden Beschreibung näher erläutert.

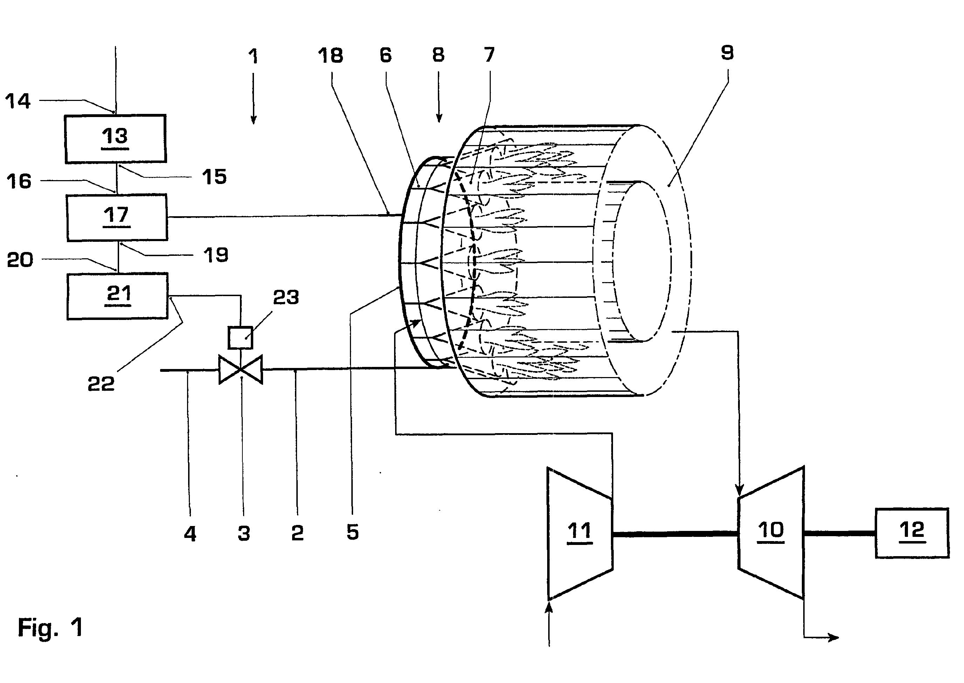

Die einzige Fig. 1 zeigt eine stark vereinfachte Prinzipdarstellung eines erfindungsgemäßen Brennstoffversorgungssystems.

## Wege zur Ausführung der Erfindung

Entsprechend Fig. 1 kann ein erfindungsgemäßes Brennstoffversorgungssystem 1 beispielsweise eine Brennstoffleitung 2 aufweisen, die einenends über ein Steuerventil 3 des Brennstoffversorgungssystems 1 an eine Brennstoffzuführungsleitung 4 angeschlossen ist und anderenends einen ringförmigen Leitungsabschnitt 5 besitzt, der über entsprechende Verbindungsleitungen 6 mit Brennern 7 einer Brenneranordnung 8 verbunden ist. Bei dieser exemplarisch dargestellten Brenneranordnung 8 sind die einzelnen Brenner 7 ringförmig angeordnet und dienen beispielsweise dazu, eine nachgeschaltete Brennkammer 9 zu beheizen, die hier als Ringkammer ausgebildet ist. Die Brennkammer 9 ist vorzugsweise einer Gasturbine 10 zugeordnet, um diese mit heißen, komprimierten Verbrennungsabgasen zu beaufschlagen. Die Turbine 10 treibt einen Verdichter 11 an, der zur Frischluftversorgung der Brennkammer 9 der Turbine 10 dient. Sofern die Turbine 10 einen Bestandteil einer Kraftwerksanlage bildet, kann diese außerdem einen Generator 12 zur Stromerzeugung antreiben.

Von den Brennern 7 der Brenneranordnung 8 sind zur Wahrung der Übersichtlichkeit nur einige dargestellt. Es ist klar, daß die Brenneranordnung 8 auch eine andere Anzahl und Anordnung von Brennern besitzen kann, insbesondere ist auch eine Ausführungsform möglich, bei der die Brenneranordnung 8 lediglich einen einzigen Brenner 7 aufweist.

Das Brennstoffversorgungssystem 1 umfaßt außerdem eine Leistungssteuerungseinheit 13, die über ihren Eingang 14 insbesondere Anforderungen für eine von der Brenneranordnung 8 abzugebende Brennerleistung erhält. Diese Brennerleistungsanforderungen können beispielsweise von einer nicht gezeigten, übergeordneten Turbinensteuerung kommen. An ihrem Ausgang 15 ist die Leistungssteuerungseinheit 13 an einen Eingang 16 einer dynamischen Korrektureinheit 17 angeschlossen. Diese dynamische Korrektureinheit 17 ist beispielsweise mit einem Temperatursensor 18 verbunden, der einen mit der Brennstofftemperatur des im Brennstoffzuführungssystem 1 enthaltenen Brennstoff korrelierenden Temperaturwert ermittelt. An ihrem Ausgang 19 ist die dynamische Korrektureinheit 17 mit einem Eingang 20 einer Ventilsteuerungseinheit 21 verbunden, die ihrerseits über ihren Ausgang 22 an ein Stellglied 23 angeschlossen ist, das zur Betätigung des Steuerventils 3 dient.

Das Brennstoffversorgungssystem 1 wird erfindungsgemäß wie folgt betrieben:

Die Leistungssteuerungseinheit 13 erhält eine Anforderung für eine Brennerleistung und ermittelt in Abhängigkeit dieser angeforderten Brennerleistung einen ersten Sollwert $\dot{m}_{out}$ für einen Brennstoffmassenstrom, mit dem die Brenneranordnung versorgt werden muß, um die angeforderte Brennerleistung erbringen zu können.

Bei einem herkömmlichen Brennstoffversorgungssystem 1, das lediglich stationäre Betriebszustände der Brenneranordnung 8 bzw. der Turbine 10 einstellen muß, kann der von der Leistungssteuerungseinheit 13 ermittelte erste Sollwert des Brennstoffmassenstroms $\dot{m}_{out}$ direkt an die Ventilsteuerungseinheit 21 weitergegeben werden, die dann in Abhängigkeit dieses ersten Sollwerts des Brennstoffmassenstroms $\dot{m}_{out}$ über das Stellglied 23 das Steuerventil 3 so betätigen würde, daß die Brennstoffzuführungsleitung 4 diesen ersten Sollwert des Brennstoffmassenstroms $\dot{m}_{out}$ in das Brennstoffversorgungssystem 1 bzw. in dessen Brennstoffleitung 2 einleitet. Nach einer gewissen Übergangszeit wird sich dieser erste Sollwert des Brennstoffmassenstroms $\dot{m}_{out}$ auch an der Brenneranordnung 8 einstellen. Bei einem instationären Betrieb der Brenneranordnung 8 bzw. der Turbine 10 sind derartige zeitliche Verzögerungen unerwünscht; die Brennerleistung soll nahezu verzögerungsfrei den jeweils gewünschten Wert aufweisen. Bei einer dynamischen Verstellung der Brennerleistung kommt es jedoch, insbesondere aufgrund der Kompressibilität des fluidischen, also flüssigen oder gasförmigen Brennstoffs und aufgrund des im Brennstoffversorgungssystem 1 enthaltenen relativ großen Brennstoffvolumens zu dynamischen Effekten, die dazu führen, daß der vom Brennstoffversorgungssystem 1 der Brenneranordnung 8 zugeführte Brennstoffmassenstrom von dem in das Brennstoffversorgungssystem 1 eingespeisten Brennstoffmassenstrom abweicht.

Zur Korrektur dieser Abweichung ist beim erfindungsgemäßen Brennstoffversorgungssystem die dynamische Korrektureinheit 17 nach Art einer Reihenschaltung zwischen die Leistungssteuerungseinheit 13 und die Ventilsteuerungseinheit 21 eingeschaltet. Die dynamische Korrektureinheit 17 ermittelt in Abhängigkeit des eingehenden ersten Sollwerts des Brennstoffmassenstroms $\dot{m}_{out}$ einen zweiten Sollwert $\dot{m}_{in}$ für den Brennstoffmassenstrom, wobei dieser zweite Sollwert des Brennstoffmassenstroms $\dot{m}_{in}$ so gewählt ist, daß das damit gespeiste Brennstoffversorgungssystem 1 die Brenneranordnung 8 mehr oder weniger exakt mit dem von der Leistungssteuerungseinheit 13 ermittelten ersten Sollwert des Brennstoffmassenstroms $\dot{m}_{out}$ versorgt. Der von der dynamischen Korrektureinheit 17 ermittelte zweite Sollwert des Brennstoffmassenstroms $\dot{m}_{in}$ wird der Ventilsteuerungseinheit 21 zugeführt, die in Abhängigkeit davon über das Stellglied 23 das Steuerventil 3 betätigt. Dementsprechend wird in das Brennstoffversorgungssystem 1 bzw. in dessen Brennstoffleitung 2 der zweite Sollwert des Brennstoffmassenstrom $\dot{m}_{in}$ eingespeist. Da dieser zweite Brennstoffmassenstrom-Sollwert $\dot{m}_{in}$ die dynamischen Effekte des Brennstoffversorgungssystems 1 mehr oder weniger genau berücksichtigt, ergibt sich dadurch, daß das Brennstoffversorgungssystem 1 mehr oder weniger genau den gewünschten ersten Brennstoffmassenstrom-Sollwert $\dot{m}_{out}$ an die Brenneranordnung 8 abgibt. Durch die Erfindung steht somit die gewünschte Brennerleistung nahezu ohne zeitliche Verzögerung zur Verfügung. Des weiteren ist es möglich, auch instationäre Betriebszustände der Brenneranordnung 8 bzw. der Turbine 10 relativ genau zu steuern.

Bei der Ermittlung des zweiten Brennstrommassenstrom-Sollwerts $\dot{m}_{in}$ kann die dynamische Korrektureinheit 17 wenigstens einen, den aktuellen Betriebszustand des Brennstoffversorgungssystems 1 charakterisierenden Parameter berücksichtigen. Insbesondere kann die dynamische Korrektureinheit 17 bei der Ermittlung des zweiten Brennstoffmassenstrom-Sollwerts $\dot{m}_{in}$ über den Temperatursensor 18 die Brennstofftemperatur $T$ und/oder den in der Brennkammer 9 herrschenden Brennkammerdruck $p_{BC}$ und/oder das mit dem Brennstoff gefüllte Volumen $V$ des Brennstoffversorgungssystems 1 und/oder den Gesamtaustrittsquerschnitt $A$ aller Brenner 7 der Brenneranordnung 8, aus dem der Brennstoff in die Brennkammer 9 austritt, und/oder den Strömungswiderstand $\zeta/A^2$ des Brennstoffversorgungssystems 1 am Übergang zwischen Brenneranordnung 8 und Brennkammer 9 berücksichtigen.

Bei einer bevorzugten Ausführungsform kann die Leistungssteuerungseinheit 13 in Abhängigkeit einer angeforderten Turbinenleistung einen zweiten Sollwert für einen am Verdichter 11 einzustellenden Verdichterdruck $pk2_{cmd}$ ermitteln. Zweckmäßig kann die dynamische Korrektureinheit 17 aus diesem Verdichterdrucksollwert $pk2_{cmd}$ den Brennkammerdruck $p_{BC}$ berechnen.

Gemäß einer Besonderheit der vorliegenden Erfindung kann der zweite Sollwert des Brennstoffmassenstroms $\dot{m}_{in}$ in Analogie zu folgender Gleichung ermittelt werden:

$$\dot{m}_{in} = \frac{k_1}{T} \frac{d\left(\dfrac{p_{BC} + \sqrt{p_{BC}^2 + k_2 \dot{m}_{out}^2 T}}{2}\right)}{dt} + \dot{m}_{out}$$

Dabei sind

$$k_1 = \frac{V}{\kappa R}$$

ein das mit Brennstoff gefüllte Volumen $V$ des Brennstoffversorgungssystems 1 berücksichtigender Faktor und

$$k_2 = 2\zeta \frac{R}{A^2}$$

ein den Strömungswiderstand der Brenneranordnung 8 berücksichtigender Faktor.
Hierbei bedeuten:

$V =$ mit Brennstoff gefülltes Volumen des Brennstoffversorgungssystems 1
$\kappa =$ Isentropenexponent des Brennstoffs
$R =$ spezifische Gaskonstante des Brennstoffs
$\zeta =$ Druckverlustbeiwert der Brenneranordnung 8
$A =$ Gesamtaustrittsquerschnitt aller Brenner 7 der Brenneranordnung 8
$T =$ Temperatur des Brennstoffs im Brennstoffversorgungssystem 1
$p_{BC} =$ Brennkammerdruck
$\dot{m}_{in} =$ zweiter Sollwert des Brennstoffmassenstroms
$\dot{m}_{out} =$ erster Sollwert des Brennstoffmassenstroms

Die vorstehend genannte Gleichung beruht auf den Annahmen, daß das gesamte Brennstoffversorgungssystem 1 ein einziges, mit Brennstoff gefülltes Volumen $V$ aufweist und daß der Brennstoff ein perfektes Gas mit den Stoffwerten $R, c_p, \kappa$ ist, wobei:

$c_p =$ die Wärmekapazität des Brennstoffs.

Bei dem so gebildeten Ersatzmodell gilt:

$$m = \frac{pV}{RT}$$

mit:

$p =$ Brennstoffdruck im Brennstoffversorgungssystem 1
$m =$ im Brennstoffversorgungssystem 1 enthaltene Brennstoffmasse
$V =$ mit Brennstoff gefülltes Volumen des Brennstoffversorgungssystems 1
$R =$ spezifische Gaskonstante des Brennstoffs
$T =$ Temperatur des Brennstoffs im Brennstoffversorgungssystem 1

Durch Ableiten und Umformen dieser Gleichung ergibt sich:

$$\dot{m} = \frac{pV}{RT}(\frac{\dot{p}}{p} - \frac{\dot{T}}{T}) = \dot{m}_{in} - \dot{m}_{out}$$

bzw.

$$\dot{m}_{in} = \frac{pV}{RT}(\frac{\dot{p}}{p} - \frac{\dot{T}}{T}) + \dot{m}_{out}$$

mit:

$\dot{m}_{in}$ = Massenstrom durch das Steuerventil 3 ins Brennstoffversorgungssystem 1 (zweiter Sollwert des Brennstoff-massenstroms)

$\dot{m}_{out}$ = Massenstrom durch die Brenneranordnung 8 in die Brennkammer 9 (erster Sollwert des Brennstoffmassenstroms)

Bei einer idealisierten Betrachtung wird $\dot{m}_{out}$ gleich dem von der Leistungssteuerungseinheit 13 ermittelten ersten Sollwert des Brennstoffmassenstroms gesetzt.

Ohne Dissipation und Wärmezufuhr gilt dann:

$$dh - vdp = 0$$

$$dh = vdp$$

$$c_p dT = vdp$$

$$\frac{dT}{dt} = \frac{v}{c_p}\frac{dp}{dt}$$

$$\dot{T} = \frac{1}{c_p \rho}\dot{p}$$

wobei:

$\rho$ = Dichte des Brennstoffs im Brennstoffversorgungssystem 1 und

$c_p$ = Wärmekapazität des Brennstoffs

In die obige Gleichung eingesetzt ergibt sich dann:

$$\dot{m}_{in} = \frac{pV}{RT}(\frac{\dot{p}}{p} - \frac{1}{c_p \rho}\frac{\dot{p}}{T}) + \dot{m}_{out}$$

6

mit

$$\frac{1}{\rho T} = \frac{R}{p}$$

ergibt sich dann:

$$\dot{m}_{in} = \frac{\dot{p}V}{RT}(1 - \frac{R}{c_p}) + \dot{m}_{out}$$

und mit

$$(1 - \frac{R}{c_p}) = \frac{1}{\kappa}$$

umgeformt erhält man:

$$\dot{m}_{in} = \frac{\dot{p}V}{\kappa RT} + \dot{m}_{out}$$

mit

$\kappa =$ Isentropenexponent des Brennstoffs.

Der erste Term auf der rechten Seite bildet somit den Korrekturterm für die Transienten (Brennkammerdruck und/oder Brennstoffmassenstrom), wobei im stationären Fall gilt:

$$\dot{m}_{in} = \dot{m}_{out}$$

Zur Berechnung dieses Korrekturterms fehlt noch die Druckänderung $\dot{p}$. Wenn in der vorstehenden Umformung die Temperaturänderung $\dot{T}$ vernachlässigt wird, kann man zu fast demselben Ergebnis kommen, jedoch ohne $\kappa$ im Nenner.
Die benötigte Druckänderung $\dot{p}$ im Brennstoffversorgungssystem 1 kann über den Druckabfall über die Brenneranordnung 8 ermittelt werden:

$$\Delta p = \zeta \frac{\rho}{2} v^2 = \zeta \frac{\rho}{2} \left( \frac{\dot{m}_{out}}{\rho A} \right)^2 = \zeta \frac{\dot{m}_{out}^2}{2\rho A^2} = \zeta \frac{\dot{m}_{out}^2 RT}{2pA^2} = p - p_{BC}$$

mit

$\zeta =$ Druckverlustbeiwert der Brenneranordnung 8

$A =$ Gesamtaustrittsfläche aller Brenner 7 der Brenneranordnung 8

Die vorstehende quadratische Gleichung kann nach $p$ aufgelöst werden:

$$p = p_{BC} + \Delta p = p_{BC} + \zeta \frac{\dot{m}_{out}^2 RT}{2pA^2}$$

$$p^2 = p_{BC} p + \zeta \frac{\dot{m}_{out}^2 RT}{2pA^2}$$

$$p^2 - p_{BC} p - \zeta \frac{\dot{m}_{out}^2 RT}{2pA^2} = 0$$

$$p = \frac{p_{BC} + \sqrt{p_{BC}^2 + 2\zeta \frac{\dot{m}_{out}^2 RT}{A^2}}}{2}$$

Die zweite Lösung der quadratischen Gleichung ergibt negative Werte für $p$.

Der so erhaltene Ausdruck wird abgeleitet und in die obige Gleichung für $\dot{m}_{in}$ eingesetzt:

$$\dot{m}_{in} = \frac{V}{\kappa RT} \frac{d\left(\frac{p_{BC} + \sqrt{p_{BC}^2 + 2\zeta \frac{\dot{m}_{out}^2 RT}{A^2}}}{2}\right)}{dt} + \dot{m}_{out}$$

Mit

$$k_1 = \frac{V}{\kappa R}$$

und

$$k_2 = 2\zeta \frac{R}{A^2}$$

können verschiedene Parameter zusammengefaßt werden, so daß sich letztlich wieder die eingangs genannte Gleichung ergibt:

$$\dot{m}_{in} = \frac{k_1}{T} \frac{d\left(\frac{p_{BC} + \sqrt{p_{BC}^2 + k_2 \dot{m}_{out}^2 T}}{2}\right)}{dt} + \dot{m}_{out}$$

Die numerische Ableitung des Brennstoffdrucks $p$ im Brennstoffversorgungssystem 1 kann beispielsweise mit Hilfe eines Derivator-Bausteins durchgeführt werden.

**Bezugszeichenliste**

1 Brennstoffversorgungssystem
2 Brennstoffleitung
3 Steuerventil
4 Brennstoffzuführungsleitung
5 Leitungsabschnitt
6 Verbindungsleitung
7 Brenner
8 Brenneranordnung
9 Brennkammer
10 Gasturbine
11 Verdichter
12 Generator
13 Leistungssteuerungseinheit
14 Eingang von 13
15 Ausgang von 13
16 Eingang von 17
17 dynamische Korrektureinheit
18 Temperatursensor
19 Ausgang von 17
20 Eingang von 21
21 Ventilsteuerungseinheit
22 Ausgang von 21
23 Stellglied

**Patentansprüche**

1. Verfahren zum Betrieb eines Brennstoffversorgungssystems (1), das eine Brenneranordnung (8) mit einem oder mehreren Brennern (7), insbesondere einer Gasturbine (10), mit einem fluiden Brennstoff versorgt,

   - wobei das Brennstoffversorgungssystem (1) eingangsseitig ein Steuerventil (3) aufweist, das in Abhängigkeit seiner Betätigung den Brennstoff in das Brennstoffversorgungssystem (1) einspeist,
   - wobei zunächst in Abhängigkeit einer angeforderten Brennerleistung ein erster Sollwert ($\dot{m}_{out}$) für einen Brennstoffmassenstrom ermittelt wird, mit dem die Brenneranordnung (8) versorgt werden muß, um die angeforderte Brennerleistung erbringen zu können,
   - wobei in Abhängigkeit dieses ersten Sollwerts des Brennstoffmassenstroms ($\dot{m}_{out}$) ein zweiter Sollwert ($\dot{m}_{in}$) für den Brennstoffmassenstrom ermittelt wird, der dann durch eine entsprechende Betätigung des Steuerventils (3) in das Brennstoffversorgungssystem (1) eingespeist wird,
   - wobei der zweite Sollwert des Brennstoffmassenstroms ($\dot{m}_{in}$) so gewählt ist, daß das damit gespeiste Brennstoffversorgungssystem (1) die Brenneranordnung (8) im wesentlichen mit dem ersten Sollwert des Brennstoffmassenstroms ($\dot{m}_{out}$) versorgt, **dadurch gekennzeichnet,**
   - **daß** die Ermittlung des zweiten Sollwerts des Brennstoffmassenstroms ($\dot{m}_{in}$) in Analogie zu folgender Gleichung erfolgt:

$$\dot{m}_{in} = \frac{k_1}{T} \frac{d\left(\dfrac{p_{BC} + \sqrt{p_{BC}^{\,2} + k_2 \dot{m}_{out}^{\,2} T}}{2}\right)}{dt} + \dot{m}_{out}$$

mit

$$k_1 = \frac{V}{\kappa R}$$

$$k_2 = 2\zeta \frac{R}{A^2}$$

wobei

$V$ = mit Brennstoff gefülltes Volumen des Brennstoffversorgungssystems (1)
$\kappa$ = Isentropenexponent des Brennstoffs
$R$ = spezifische Gaskonstante des Brennstoffs
$\zeta$ = Druckverlustbeiwert der Brenneranordnung (8)
$A$ = Gesamtaustrittsquerschnitt aller Brenner (7) der Brenneranordnung (8)
$T$ = Temperatur des Brennstoffs im Brennstoffversorgungssystem (1)
$p_{BC}$ = Brennkammerdruck
$\dot{m}_{in}$ = zweiter Sollwert des Brennstoffmassenstroms
$\dot{m}_{out}$ = erster Sollwert des Brennstoffmassenstroms.

2. Verfahren nach Anspruch 1,
**dadurch gekennzeichnet,**
**daß** die Brenneranordnung (8) die Brennkammer (9) einer Gasturbine (10) beheizt, die einen Verdichter (11) zur Frischluftversorgung der Turbine (10) antreibt, wobei der Brennkammerdruck ($p_{BC}$) aus einem am Verdichter (11) einzustellenden Sollwert für den Verdichterdruck ($pk2_{cmd}$) berechnet wird, der seinerseits in Abhängigkeit einer angeforderten Turbinenleistung ermittelt wird.

3. Brennstoffversorgungssystem zur Versorgung einer Brenneranordnung (8) mit wenigstens einem Brenner (7), insbesondere einer Gasturbine (10), mit einem fluiden Brennstoff,

- mit einem Steuerventil (3), das in einer das Brennstoffversorgungssystem (1) mit dem Brennstoff speisenden Brennstoffzuführungsleitung (4) angeordnet ist und in Abhängigkeit seiner Betätigung das Brennstoffversorgungssystem (1) mit dem Brennstoff speist,
- mit einer Leistungssteuerungseinheit (13), die in Abhängigkeit einer angeforderten Brennerleistung einen ersten Sollwert ($\dot{m}_{out}$) für einen Brennstoffmassenstrom ermittelt, mit dem die Brenneranordnung (8) versorgt werden muß, um die angeforderte Brennerleistung erbringen zu können,
- mit einer dynamischen Korrektureinheit (17), die in Abhängigkeit dieses ersten Sollwerts des Brennstoffmassenstroms ($\dot{m}_{out}$) einen zweiten Sollwert ($\dot{m}_{in}$) für den Brennstoffmassenstrom ermittelt, der so gewählt ist, daß das damit gespeiste Brennstoffversorgungssystem (1) die Brenneranordnung (8) im wesentlichen mit dem ersten Sollwert des Brennstoffmassenstroms ($\dot{m}_{out}$) versorgt,
- mit einer Ventilsteuerungseinheit (21), die in Abhängigkeit des zweiten Sollwerts des Brennstoffmassenstroms ($\dot{m}_{in}$) das Steuerventil (3) betätigt, um den zweiten Sollwert des Brennstoffmassenstroms ($\dot{m}_{in}$) in das Brennstoffversorgungssystem (1) einzuspeisen, **dadurch gekennzeichnet,**
- **daß** die dynamische Korrektureinheit (17) den zweiten Sollwert des Brennstoffmassenstroms ($m_{in}$) in Analogie zu folgender Gleichung ermittelt:

$$\dot{m}_{in} = \frac{k_1}{T} \frac{d\left(\frac{p_{BC} + \sqrt{p_{BC}^2 + k_2 \dot{m}_{out}^2 T}}{2}\right)}{dt} + \dot{m}_{out}$$

mit

$$k_1 = \frac{V}{\kappa R}$$

$$k_2 = 2\zeta \frac{R}{A^2}$$

wobei

$V$ = mit Brennstoff gefülltes Volumen des Brennstoffversorgungssystems (1)
$\kappa$ = Isentropenexponent des Brennstoffs
$R$ = spezifische Gaskonstante des Brennstoffs
$\zeta$ = Druckverlustbeiwert der Brenneranordnung (8)
$A$ = Gesamtaustrittsquerschnitt aller Brenner (7) der Brenneranordnung (8)
$T$ = Temperatur des Brennstoffs im Brennstoffversorgungssystem (1)
$p_{Bc}$ = Brennkammerdruck
$\dot{m}_{in}$ = zweiter Sollwert des Brennstoffmassenstroms
$\dot{m}_{out}$ = erster Sollwert des Brennstoffmassenstroms.

4. Brennstoffversorgungssystem nach Anspruch 3,
**dadurch gekennzeichnet,**
**daß** die dynamische Korrektureinheit (17) zwischen die Leistungssteuerungseinheit (13) und die Ventilsteuerungseinheit (21) zwischengeschaltet ist, wobei Ausgangssignale der Leistungssteuerungseinheit (13) einem Eingang (16) der dynamischen Korrektureinheit (17) und Ausgangssignale der dynamischen Korrektureinheit (17) einem Eingang (20) der Ventilsteuerungseinheit (21) zugeführt werden.

**Claims**

1. Method for operating a fuel supply system (1) that supplies a fluid fuel to a burner arrangement (8) with one or more burners (7), in particular a gas turbine (10),

- in which the fuel supply system (1) has on the inlet side a control valve (3) that feeds the fuel into the fuel supply system (1) as a function of its actuation,
- in which, firstly, as a function of a requested burner output, a first setpoint ($\dot{m}_{out}$) is determined for a fuel mass flow with which the burner arrangement (8) must be supplied in order to be able to furnish the required burner output,
- in which as a function of this first setpoint of the fuel mass flow ($\dot{m}_{out}$) a second setpoint ($\dot{m}_{in}$) is determined for the fuel mass flow, which is then fed into the fuel supply system (1) by an appropriate actuation of the control valve (3), and
- in which the second setpoint of the fuel mass flow ($\dot{m}_{in}$) is selected such that the fuel supply system (1) fed therewith supplies the burner arrangement (8) essentially with the first setpoint of the fuel mass flow ($\dot{m}_{out}$), **characterized**
- **in that** the second setpoint of the fuel mass flow ($\dot{m}_{in}$) is determined by analogy with the following equation:

$$\dot{m}_{in} = \frac{k_1}{T} \frac{d\left(\dfrac{p_{BC} + \sqrt{p_{BC}^2 + k_2 \dot{m}_{out}^2 T}}{2}\right)}{dt} + \dot{m}_{out}$$

where

$$k_1 = \frac{V}{\kappa R}$$

$$k_2 = 2\zeta \frac{R}{A^2}$$

in which

$V$ = volume of the fuel supply system (1) filled with fuel
$\kappa$ = isentropic exponent of the fuel
$R$ = specific gas constant of the fuel
$\zeta$ = pressure loss coefficient of the burner arrangement (8)
$A$ = overall exit cross section of all the burners (7) of the burner arrangement (8)
$T$ = temperature of the fuel in the fuel supply system (1)
$p_{BC}$ = combustion chamber pressure
$\dot{m}_{in}$ = second setpoint of the fuel mass flow
$\dot{m}_{out}$ = first setpoint of the fuel mass flow.

2. Method according to Claim 1, **characterized in that** the burner arrangement (8) heats the combustion chamber (9) of a gas turbine (10) that drives a compressor (11) for supplying fresh air to the turbine (10), the combustion chamber pressure ($p_{BC}$) being calculated from a setpoint, to be set at the compressor (11), for the compressor pressure ($pk2_{cmd}$) that is determined, for its part, as a function of a requested turbine output.

3. Fuel supply system for supplying a fluid fuel to a burner arrangement (8) with at least one burner (7), in particular a gas turbine (10),

- having a control valve (3) that is arranged in a fuel feed line (4) feeding fuel to the fuel supply system (1), and feeds the fuel to the fuel supply system (1) as a function of the actuation of said control valve,
- having a power control unit (13) that determines as a function of a required burner output a first setpoint ($\dot{m}_{out}$) for a fuel mass flow with the aid of which the burner arrangement (8) must be supplied, in order to be able to furnish the required burner output,
- having a dynamic correction unit (17) that determines as a function of this first setpoint of the fuel mass flow ($\dot{m}_{out}$) a second setpoint value ($\dot{m}_{in}$) for the fuel mass flow that is selected such that the fuel supply system (1) thus fed essentially supplies the burner arrangement (8) with the first setpoint of the fuel mass flow ($\dot{m}_{out}$), and
- having a valve control unit (21) that actuates the control valve (3) as a function of the second setpoint of the fuel mass flow ($\dot{m}_{in}$) in order to feed the second setpoint of the fuel mass flow ($\dot{m}_{in}$) into the fuel supply system (1), **characterized**
- **in that** the dynamic correction unit (17) determines the second setpoint of the fuel mass flow ($\dot{m}_{in}$) by analogy with the following equation:

$$\dot{m}_{in} = \frac{k_1}{T} \frac{d\left(\dfrac{p_{BC} + \sqrt{p_{BC}^2 + k_2 \dot{m}_{out}^2 T}}{2}\right)}{dt} + \dot{m}_{out}$$

where

$$k_1 = \frac{V}{\kappa R}$$

$$k_2 = 2\zeta \frac{R}{A^2}$$

in which

$V$ = volume of the fuel supply system (1) filled with fuel
$\kappa$ = isentropic exponent of the fuel
$R$ = specific gas constant of the fuel
$\zeta$ = pressure loss coefficient of the burner arrangement (8)
$A$ = overall exit cross section of all the burners (7) of the burner arrangement (8)
$T$ = temperature of the fuel in the fuel supply system (1)
$p_{BC}$ = combustion chamber pressure
$\dot{m}_{in}$ = second setpoint of the fuel mass flow
$\dot{m}_{out}$ = first setpoint of the fuel mass flow.

4. Fuel supply system according to Claim 3, **characterized in that** the dynamic correction unit (17) is connected between the power control unit (13) and the valve control unit (21), output signals of the power control unit (13) being fed to an input (16) of the dynamic correction unit (17), and output signals of the dynamic correction unit (17) being fed to an input (20) of the valve control unit (21).

**Revendications**

1. Procédé de gestion du fonctionnement d'un système (1) d'alimentation en combustible qui alimente en combustible liquide un agencement (8) de brûleurs, en particulier d'une turbine à gaz (10), qui présente un ou plusieurs brûleurs (7),

- le système (1) d'alimentation en combustible présentant à son entrée une vanne de commande (3) dont l'actionnement permet d'injecter le combustible dans le système (1) d'alimentation en combustible,
- une première valeur de consigne ($\dot{m}_{out}$) du débit massique de combustible qui doit alimenter l'agencement (8) de brûleurs étant d'abord déterminée en fonction de la puissance imposée au brûleur, pour pouvoir obtenir la puissance imposée au brûleur,
- une deuxième valeur de consigne ($\dot{m}_{in}$) du débit massique de combustible étant ensuite déterminée en fonction de cette première valeur de consigne ($\dot{m}_{out}$) du débit massique de combustible et étant injectée dans le système (1) d'alimentation en combustible par actionnement approprié de la vanne de commande (3),
- la deuxième valeur de consigne ($\dot{m}_{in}$) du débit massique de combustible étant sélectionnée de telle sorte que le système (1) d'alimentation en combustible ainsi alimenté délivre à l'agencement (8) de brûleurs essentiellement la première valeur de consigne ($\dot{m}_{out}$) du débit massique de combustible,

**caractérisé en ce que**

- la deuxième valeur de consigne ($\dot{m}_{in}$) du débit massique de combustible est déterminée par application de l'équation ci-dessous :

$$\dot{m}_{in} = \frac{k_1}{T} \cdot \frac{d\left(\dfrac{p_{BC} + \sqrt{p_{BC}^2 + k_2 \dot{m}_{out}^2 T}}{2}\right)}{dt} + \dot{m}_{out}$$

dans laquelle :

$$k_1 = \frac{V}{\kappa R}$$

$$k_2 = 2\zeta \frac{R}{A^2}$$

et :

V = volume alimenté en combustible du système (1) d'alimentation en combustible
$\kappa$ = exposant isentropique du combustible
R = constante gazeuse spécifique du combustible
$\zeta$ = facteur de correction de la perte de charge de l'agencement (8) de brûleurs
A = section transversale totale de sortie de tous les brûleurs (7) de l'agencement (8) de brûleurs
T = température du combustible dans le système (1) d'alimentation en combustible
$p_{BC}$ = pression dans la chambre de combustion
$\dot{m}_{in}$ = deuxième valeur de consigne du débit massique de combustible
$\dot{m}_{out}$ = première valeur de consigne du débit massique de combustible.

2. Procédé selon la revendication 1, **caractérisé en ce que** l'agencement (8) de brûleurs chauffe la chambre de combustion (9) d'une turbine à gaz (10) qui entraîne un compresseur (11) d'alimentation en air frais de la turbine (10), la pression ($p_{BC}$) dans la chambre de combustion étant calculée à partir d'une pression de consigne de la pression ($pk2_{cmd}$) du compresseur qui doit être établie sur le compresseur (11) et qui est elle-même déterminée en fonction de la puissance demandée à la turbine.

3. Système d'alimentation en combustible qui alimente en combustible liquide un agencement (8) de brûleurs, en particulier d'une turbine à gaz (10), qui présente au moins un brûleur (7) et

- une vanne de commande (3) disposée dans le conduit (4) d'alimentation en combustible qui alimente en combustible le système (1) d'alimentation en combustible et dont l'actionnement permet d'injecter le combustible dans le système (1) d'alimentation en combustible,
- une unité (13) de commande de puissance, qui détermine en fonction de la puissance imposée au brûleur une première valeur de consigne ($\dot{m}_{out}$) du débit massique de combustible qui doit alimenter l'agencement (8) de brûleurs, pour pouvoir obtenir la puissance imposée au brûleur,
- une unité (17) de correction dynamique qui détermine en fonction de cette première valeur de consigne ($\dot{m}_{out}$) du débit massique de combustible une deuxième valeur de consigne ($\dot{m}_{in}$) du débit massique de combustible qui est sélectionnée de telle sorte que le système (1) d'alimentation en combustible ainsi alimenté délivre à l'agencement (8) de brûleurs essentiellement la première valeur de consigne ($\dot{m}_{out}$) du débit massique de combustible,

- une unité (21) de commande de vanne qui actionne la vanne de commande (3) en fonction de la deuxième valeur de consigne ($\dot{m}_{in}$) du débit massique de combustible de manière à injecter la deuxième valeur de consigne ($\dot{m}_{in}$) du débit massique de combustible dans le système (1) d'alimentation en combustible,

**caractérisé en ce que**

- l'unité (17) de correction dynamique détermine la deuxième valeur de consigne ($\dot{m}_{in}$) du débit massique de combustible par application de l'équation ci-dessous :

$$\dot{m}_{in} = \frac{k_1}{T} \frac{d\left(\dfrac{p_{BC} + \sqrt{p_{BC}^2 + k_2 \dot{m}_{out}^2 T}}{2}\right)}{dt} + \dot{m}_{out}$$

dans laquelle :

$$k_1 = \frac{V}{\kappa R}$$

$$k_2 = 2\zeta \frac{R}{A^2}$$

et :

V = volume alimenté en combustible du système (1) d'alimentation en combustible
$\kappa$ = exposant isentropique du combustible
R = constante gazeuse spécifique du combustible
$\zeta$ = facteur de correction de la perte de charge de l'agencement (8) de brûleurs
A = section transversale totale de sortie de tous les brûleurs (7) de l'agencement (8) de brûleurs
T = température du combustible dans le système (1) d'alimentation en combustible
$p_{BC}$ = pression dans la chambre de combustion
$\dot{m}_{in}$ = deuxième valeur de consigne du débit massique de combustible
$\dot{m}_{out}$ = première valeur de consigne du débit massique de combustible.

4. Système d'alimentation en combustible selon la revendication 3, **caractérisé en ce que** l'unité (17) de correction dynamique est intercalée entre l'unité (13) de commande de puissance et l'unité (21) de commande de vanne, les signaux de sortie de l'unité (13) de commande de puissance étant amenés à une entrée (16) de l'unité (17) de correction dynamique et les signaux de sortie de l'unité (17) de correction dynamique à une entrée (20) de l'unité (21) de commande de vanne.

Fig. 1

**EP 1 273 776 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6148601 A